# EUROPEAN PATENT SPECIFICATION

(11) **EP 0 604 683 B1**
(45) Date of publication and mention of the grant of the patent: **12.05.1999**
(21) Application number: 92122145.3
(22) Date of filing: 31.12.1992
(51) Int. Cl.: H01M 8/10, H01M 8/04, H01M 8/02

(54) **Fuel cell membrane electrode and seal assembly**
Membranelektrodenzusammenbau und Abdichtung für Brennstoffzellen
Ensemble membrane-électrodes pour piles à combustible rendu étanches

(43) Date of publication of application: 06.07.1994
(73) Proprietor: BALLARD POWER SYSTEMS INC., Burnaby, British Columbia V5J 5J9 (CA)
(72) Inventor: Epp, Danny G., Tsawwassen, British Columbia, V4M 2V4 (CA); Wiens, Ben I., Coquitlam, British Columbia, V3K 1G3 (CA)
(74) Representative: Hoeger, Stellrecht & Partner

(56) References cited:
- EP-A- 0 463 542
- WO-A-89/06055
- WO-A-93/13566
- FR-A- 1 412 583
- FR-A- 1 564 447
- US-A- 3 012 086
- US-A- 4 804 592
- US-A- 5 176 966
- PATENT ABSTRACTS OF JAPAN vol. 15, no. 479 (E-1141)5 December 1991
- PATENT ABSTRACTS OF JAPAN vol. 13, no. 92 (E-722)(3440) 3 March 1989
- PROCEEDINGS OF THE 26TH INTERSOCIETY ENERGY CONVERSION ENGINEERING CONFERENCE IECEC-91 vol. 3, 4 August 1991, MASSACHUSETTS pages 636 - 641 M. S WILSON ET AL 'RECENT ACHIEVEMENTS IN POLYMER ELECTROLYTE FUEL CELL (PEFC) RESEARCH AT LOS ALAMOS NATIONAL LABORATORY'

## Description

This invention relates to a membrane electrode assembly of an electrochemical fuel cell for a stack of several such fuel cells.

Electrochemical fuel cells employing membrane electrode assemblies are known and have been produced and sold for many years. Such cells are known as solid polymer type fuel cells, and comprise, in the heart of the system, two porous electrodes separated by an electrolyte material. The porous electrodes, conveniently made from carbon fiber paper ("CFP") and a catalyst such as platinum, and the electrolyte material in the form of a membrane together form an assembly called a membrane electrode assembly ("MEA"). The MEA is located between two electrically conductive or, conveniently, graphite flow-field plates. The graphite flow field plates supply fuel and oxidant in the form of hydrogen and air or oxygen, respectively, to the MEA and also act to provide current generated by the fuel, cell to an external electrical circuit where it may be stored or otherwise used. The fuel and oxidant are supplied to the MEA by grooves in the surface of the graphite flow field plates adjacent the carbon fiber paper. The grooves communicate via manifolds carrying gases to each of the individual MEAs.

The assembly includes a catalytic material, conveniently platinum as aforesaid, on the surface of the CFP which renders the CFP an electrode. Each electrode portion of the CFP contacts the membrane. The CFP of the electrode is made hydrophobic. Ridges between the grooves in the graphite flow field plates contact the back of the electrode portion of the CFP. The MEA consumes the fuel and oxidant through an electrochemical process and produces an electrical current which can be drawn from the electrodes to an external circuit.

To ensure that the fuel and oxidant gases supplied to the MEA do not mix, sealing to prevent such mixing is imperative. In the event that hydrogen and oxygen combine within the fuel cell in combination with the catalyst, a combustible mixture can form and inflame. In the event that the fuel and oxidant leak from the interior to the exterior of the fuel cell, it can reduce the efficiency of the fuel cell and create a fire or explosive hazard.

In conventional fuel cells, an MEA was used between the two electrically conductive, preferably graphite, plates which included a membrane bonded between the CFP layers. The membrane extended substantially beyond the edge or periphery of the CFP layers and was not supported by or bonded to them, and the CFP layers covered only the inner or active portion of the membrane. The outer periphery of the membrane was free of the CFP.

This conventional membrane electrode assembly was disadvantageous in several respects. First, the membrane was installed between two adjacent electrically conductive plates and acted as a gasket sealing the gases in the electrode region from the exterior, isolating the gases in their respective manifolds and electrically insulating the electrical conducting flow field plates between which it was installed.

Such a configuration for the membrane, however, did not function well as a gasket. The membranes were subject to shrinking and swelling depending on the water content of the membrane. Since they were free to shrink and swell, the potential for tearing or for fatigue cracks to form was high. Although various techniques were utilized in an attempt to minimize the leaks across the membrane between the flow field plates, the techniques were expensive and substantially ineffective over an extended time period.

These applications of the membrane electrolyte, where the unsupported outer edges of the membrane serve as the insulator and gasket between the opposing flow field plates, place strength and resilience demands upon the membrane which then limit the minimum thickness of electrolyte which can realistically be used in a fuel cell. At a thickness below about 0,13 mm (0.005 inches), the typical membrane material is too fragile to withstand the compressive forces required for sealing. Such thin membranes are subject to tearing when the cell is assembled or disassembled and when the membrane electrolyte is cycled between the hydrated operating state and the dehydrated non-operating state.

Up to a point, it is desirable to reduce the thickness of the membrane electrolyte as the electrolyte represents a substantial component of the internal electrical resistance of the fuel cell. A fuel cell with a thinner electrolyte will have a lower internal resistance and thus a higher voltage will be available at the fuel cell terminals for a given current demand. This translates directly into a greater power and fuel efficiency being derived from a fuel cell with a thinner electrolyte. This improvement is balanced only by the requirement that the membrane be sufficiently thick to sustain the operating pressure differential between the fuel and oxidant gases and to minimize the diffusional mixing of these two gas streams through the membrane.

With the unsupported membrane of the conventional membrane electrode assembly, it was also necessary to machine a recess in each flow field plate contiguous with the periphery of the CFP so that the MEA could be appropriately positioned between the flow field plates with a uniform distance being maintained about the periphery so that the membrane could be tightened appropriately between the plates and function with a good sealing action. Such machining was time consuming and expensive and, in fact, did not assist substantially in enhancing the sealing action.

Yet a further disadvantage with the conventional membrane electrode assembly was that the membrane itself was difficult to position and maintain in position while the stack assembly was being assembled. This was so since the membrane is quite thin and is inherently very flexible. It was also being subject to expanding and contracting due to the humidity changes in the gases to which the membrane was subjected.

Yet a further disadvantage in the prior membrane electrode assembly was the problem of positioning seals about the water and gas passages which extended through the flow field plates and the membrane. This was accomplished by machining grooves in the graphite flow field plates on either side of the membrane assembly and manually positioning rubber seals in the grooves. This was time consuming and, when assembling the cells, the seals could be dislodged from the grooves if of an O-ring configuration. If the seals took a rectangular configuration, they could be rolled in their grooves. In either case, the sealing action was adversely affected.

US-A-3 012 086 discloses a stack of electrochemical fuel cells wherein each of said fuel cells consists of a stack of five congruent rectangular plates, namely a central ion-exchange membrane interposed between a fuel gas electrode plate and an oxidizing gas electrode plate which in turn are interposed between two outer spacer plates acting as gasket plates. Each of the electrode plates has a rectangular electrode portion surrounded by an outer frame-like gasket portion, the electrode portion being fabricated of a porous material having the proper catalytic properties.

It is an object of the present invention to provide improved sealing means which safely prevent undesirable escape of the fluid reactants to be used in a stack of electrochemical fuel cells for generating electrical energy.

With a membrane electrode assembly of an electrochemical fuel cell for a stack of several such fuel cells, wherein said assembly comprises first and second layers of porous electrically conductive sheet material and a substantially gas impermeable ion-exchange membrane interposed therebetween, said layers of conductive sheet material covering and supporting substantially the entire surface of said membrane and being fluidly isolated from each other, and wherein each of said layers of conductive sheet material includes a catalyst on at least a portion thereof thereby rendering said layers electrochemically active in the areas containing said catalyst, in compliance with the present invention the aforesaid object is achieved in that each of said layers of conductive sheet material has a sealant material protruding above the surface thereof facing away from said membrane, said sealant material extending within the pores of said conductive sheet material layers.

EP-A-0 463 542 discloses a continuous concentration electrochemical cell enabling the recirculation of hydrogen gas from a cathode to an anode of the electrochemical cell. In this electrochemical system hydrogen gas is generated at the cathode and consumed at the anode, which inherently involves a gas conduit between the electrodes. The system comprises a substantially gas impermeable ion-exchange membrane interposed between the electrodes, i. e. the cathode and the anode, and the membrane electrode assembly is interposed between two graphite plates used as current collectors. The electrodes are fabricated of a porous sheet material including a catalyst, and at one of the lateral sides of the membrane electrode assembly the electrodes extend beyond the adjacent lateral edges of the membrane and the graphite plates so that hydrogen gas can pass longitudinally through the porous electrodes and the gas conduit connected to the projecting portions of the electrodes.

Further improvements of the inventive membrane electrode assembly are defined by enclosed claims 2 to 11.

In the preferred embodiment, the membrane is a solid polymer ion exchange membrane and the sheet material comprises carbon fiber paper. The membrane most preferably has a thickness between about 0,03 mm (.001 inches) and about 0,13 mm (.005 inches).

The preferred catalyst comprises platinum. The catalyst is preferably included on at least a portion of the surface of each of the layers of sheet material facing the membrane. Most preferably, the catalyst is included on the central portion of each of the layers of sheet material. The layers of sheet material and the membrane are preferably bonded together to form a consolidated membrane electrode assembly.

In the preferred membrane electrode assembly, the layers of sheet material and the membrane have openings formed therein to accommodate the passage of fluids through the assembly. The fluids include fuel gas, oxidant gas and coolant. The preferred coolants are water and ethylene glycol.

In one embodiment of the membrane electrode and seal assembly, each of the layers of sheet material has grooves formed in the surface thereof facing away from the membrane. The grooves have an extrudable sealant material deposited therein, and generally circumscribe the fluid passage openings. A groove generally circumscribing the electrochemically active portion of the assembly can also be formed in each of the layers of sheet material. The grooves preferably extend substantially the entire thickness of each of the layers of sheet material, and in the most preferred embodiment, the sealant material contacts the membrane. The sealant material preferably comprises silicon rubber.

In another embodiment of the membrane electrode and seal assembly, the surfaces of the layers of sheet material facing away from the membrane are impregnated with a sealant material. The sealant material generally circumscribes the fluid passage openings. The sealant material can also circumscribe the electrochemically active portion of the assembly. The sealant material preferably extends substantially the entire thickness of the layers of sheet material. In the most preferred embodiment, the sealant material contacts the membrane. The sealant material preferably comprises silicon rubber.

### BRIEF DESCRIPTION OF THE DRAWINGS

A specific embodiment of the invention will now be described, by way of example only, with the use of drawings in which:
Figure 1 is an exploded side view of the stack assembly for a fuel cell incorporating the membrane electrode and seal assembly according to the invention;
Figure 2 is an end view of the fuel cell stack assembly illustrated in Figure 1;
Figures 3 is a front diagrammatic view of a conventional fluid flow field plate;
Figure 4 is an enlarged cross-sectional view of the fluid flow groove in the conventional fluid flow field plate of Figure 3;
Figure 5 is a front view of a membrane electrode assembly according to the invention;
Figure 6 is a bottom view of the membrane electrode assembly of Figure 5:
Figure 7 is an exploded perspective view of the membrane electrode assembly of Figures 5 and 6; and
Figure 8 is an enlarged cross-sectional view of a typical sealing groove in the electrode taken along line 8-8 of Figure 5.

### DETAILED DESCRIPTION OF THE DRAWINGS

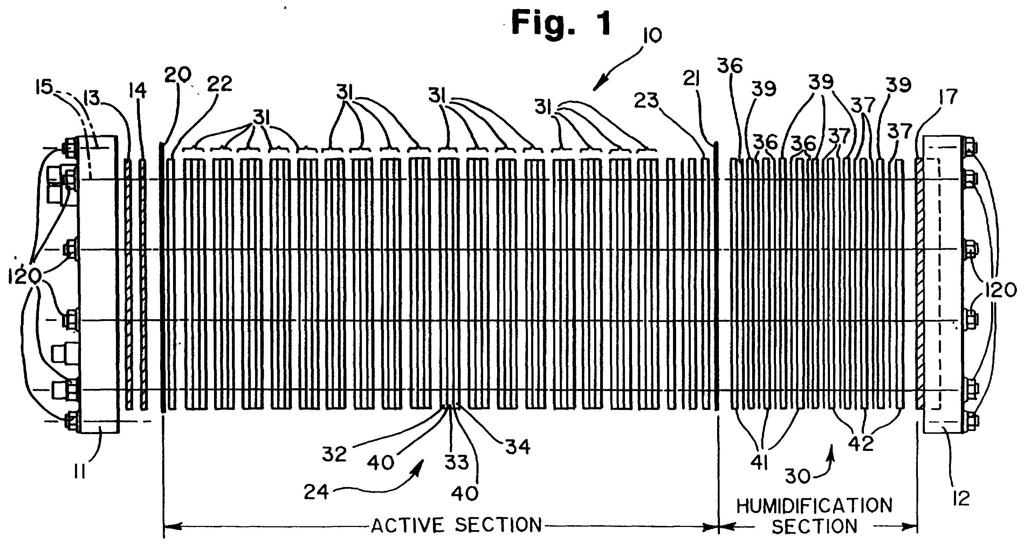

Referring now to the drawings and, in particular, to Figure 1, a fuel cell stack assembly is generally illustrated in exploded form at 10. The stack assembly includes a pair of end plates 11, 12 which conveniently are fluid end plates which terminate the stack assembly 10 and a plurality of threaded tie rods 15 extending between the end plates 11, 12 to retain and hold the stack assembly 10 in its assembled condition.

A spacer plate 13 and an electrical isolation plate 14 are positioned inside the end plate 11 and a piston 17 is positioned within the end plate 12. Buss plates 20, 21 are located on opposite ends of the stack assembly 10 as indicated and carry the voltage and current generated by the fuel cell 10. Cooling water jackets 22, 23 are located immediately inside the buss plates 20, 21.

The stack assembly 10 includes a so-called "active" section generally illustrated at 24 and a "humidification" section generally illustrated at 30. The active section 24 includes in addition to the buss plates 20, 21 and cooling water jackets 22, 23, a plurality of identical assemblies illustrated generally at 31, each assembly consisting of three fluid flow field or graphite plates 32, 33, 34 and two membrane electrode assemblies generally illustrated at 40 which are assembled between the plates 32, 33, 34. In each assembly 31, the leftmost flow plate 32 carries the fuel in the form of hydrogen gas, the center flow plate 33 carries the oxidant in the form of oxygen or air on one side and hydrogen on the opposite side and the rightmost plate 34 carries the oxidant on the side adjacent the assembly 40 and water on the opposite side. The configuration of the assembly 31 thus provides for the hydrogen and the oxidant to be located on opposite sides of each membrane electrode assembly 40 and a coolant fluid flow plate in the form of a coolant jacket which is, in the present instance, a water jacket, to be located adjacent each hydrogen flow field plate. This configuration is typical and extends throughout the active section 24.

The humidification section 30 includes a plurality of oxidant flow field plates 41 generally located on the left hand side of the humidification section 30 illustrated in Figure 1. The humidification section 30 also includes a plurality of fuel humidification flow field plates 42 generally located on the right hand side of the humidification section 30, a plurality of fuel humidification membranes 37 and a plurality of oxidant humidification membranes 36 positioned between the fuel humidification flow field plates 42 and the oxidant flow field plates 41, respectively. The humidification section 30 acts to humidify the gases used so that the solid polymer ion exchange membranes in the active section 24 will remain moist or wet as described hereafter. In general, hydrogen ions will diffuse less readily through solid polymer ion exchange membranes if the membranes are allowed to dry. A lower rate of hydrogen diffusion will in turn reduce overall cell efficiency. The humidification section 30 is intended to prevent the membranes from drying by humidifying the fuel and oxidant gases fed to the active section 24.

The active section 24 also differs from the humidification section 30 in that there is no electricity produced in the humidification section 30 whereas in the active section 24 electricity is produced by reason that a catalyst in the form of platinum is present in the carbon fiber paper forming the membrane electrode assemblies 40 and thus renders a portion of each layer of carbon fiber paper electrochemically active.

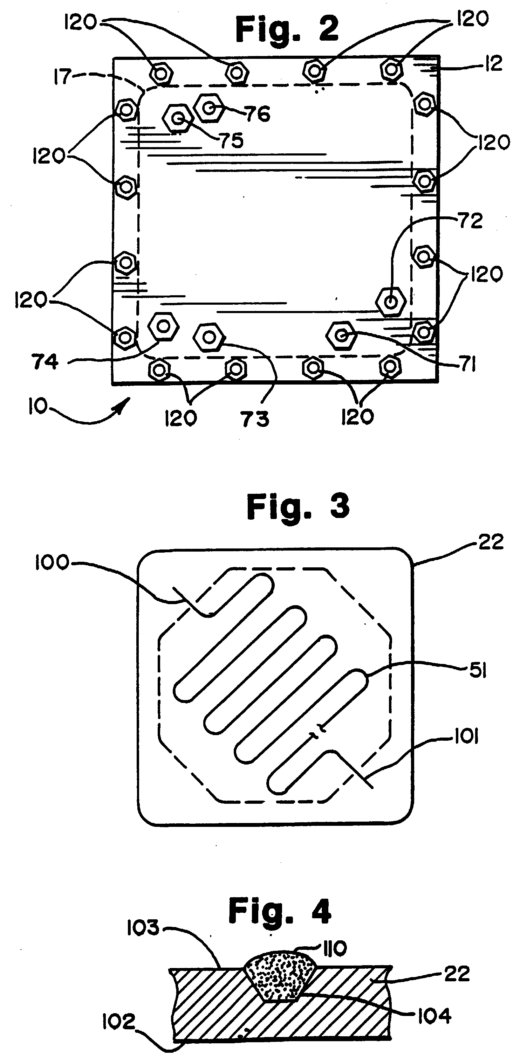

Figure 2 is an end view of the fuel cell stack assembly 10 illustrated in Figure 1, showing hydrogen (fuel) gas inlet 71, hydrogen (fuel) gas outlet 72, air (oxidant) inlet 73, air (oxidant) outlet 74, water inlet 75 and water outlet 76. Figure 2 also shows end plate 12, piston 17, and tie rod nuts 120.

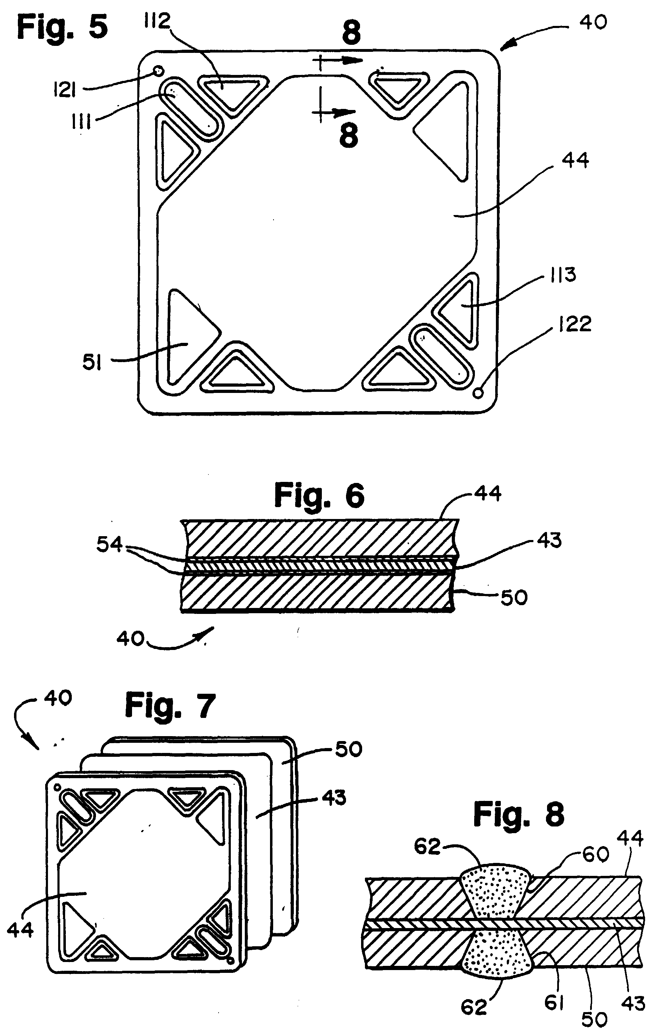

The membrane electrode assemblies 40 in the active section 24 are identical and a typical assembly is illustrated at 40 in Figures 5, 6 and 7. Each membrane electrode assembly 40 comprises three elements, namely, a first layer of a porous electrically conductive support material, conveniently a porous carbon fiber paper 44, a second layer of an electrolyte material which is a solid polymer ion exchange membrane 43, and a third layer of a porous electrically conductive support material 50, conveniently formed of carbon fiber paper. The layers of carbon fiber paper 44, 50 support the membrane 43 therebetween to form a consolidated assembly 40 as described in greater detail hereafter. The carbon fiber papers layers 44, 50 are each treated with a catalyst on the surfaces adjacent and in contact with the membrane 43, thus to form electrodes. The treated area coincides with the flow field of the graphite plates which carry the gases to the carbon fiber paper.

A solid polymer ion exchange membrane 43 is conveniently used which has a conventional thickness of approximately 0,18 mm (.007 inches). This thickness, however, was necessary to reduce tearing and other damage when in an unsupported configuration. It is believed that a reduced thickness will be possible to use with the membrane as supported according to the present invention and, indeed, performance comparisons made to date indicate that with a constant cell terminal voltage, a membrane having a reduced thickness will give enhanced current density. For example, with a membrane cell voltage of 0.6 volts, a DOW 4 (trademark) membrane with a thickness of 0,160 - 0,168 mm (.0063-.0066 inches) exhibits a current density of approximately 25 833 Amp./m² (2400 amperes per square foot) whereas with the same voltage, a DOW 2 (trademark) membrane having a thickness of 0,089 - 0,099 mm (.0035-.0039 inches) will provide a current density of approximately 34 445 Amp./m² (3200 amperes per square foot), the only difference between the two membranes being one of thickness.

A coolant fluid flow field plate 22 is illustrated in Figures 3 and 4. One side 102 of the plate 22 is blank but the opposite side 103 as illustrated has a plurality, namely ten, liquid carrying grooves 51 formed therein to carry the coolant, namely liquid water, from the inlet 100 to the outlet 101 although only one groove 51 is illustrated in Figure 3 for simplicity. In addition, a plurality of openings (not shown) extend through the plate 22 to allow for passage of the hydrogen and the air or oxidant through the plate 22.

The plate 22, as described, is mounted against the blank side of the hydrogen flow field plate 32 (see Figure 1). To that end, it is necessary to seal the plate 22 against the blank side of fuel plate 32 to prevent the escape of water. Reference is made to sealing groove 104 in Figure 4 which carries sealant material in the form of silicon rubber or extrudable elastomeric sealant material 110. Groove 104 is machined in plate 22 and the sealant material 110 is injected into the groove 104 prior to assembling the stack assembly 10 and, in particular, prior to assembling the plate 22 against the fuel flow field plate 32.

Referring to the membrane electrode assembly 40 of Figures 5, 6 and 7, the two layers of carbon fiber paper 44, 50 support the membrane 43 completely therebetween so as to form a consolidated unit. It will be particularly noted that the membrane 43 is interposed between the layers 44, 50 over substantially all of its surface area and that the opening 51 (air outlet), opening 52 (air inlet), opening 111 (water outlet), opening 112 (water inlet), opening 113 (hydrogen outlet), and opening 114 (hydrogen inlet) extend through not only the membrane 43 but also through the carbon fiber layers 44 and 50.

A fuel gas which is conveniently hydrogen is supplied to the back of one of the porous electrodes while an oxidant gas such as oxygen or air is supplied to the back of the other electrode. The electrochemical process thereby carried out consumes the fuel and oxidant and produces an electric current which is available to be drawn from the porous electrodes. The membrane 43 permits the diffusion through the membrane 43 of hydrogen ions and is intended to be substantially impervious to hydrogen and oxygen molecules. A catalyst 54, in the present case being platinum, is added to the surface area of each of the carbon fiber paper surfaces adjacent the membrane 43. The catalyst promotes the electrochemical reaction of hydrogen and oxygen, renders the carbon fiber paper electrochemically active and thereby produces the electrical current generated at the buss plates 20, 21.

With reference now to Figure 8, sealing grooves 60, 61 are formed in the layers 44, 50, respectively, but the grooves do not extend through the membrane 43. The grooves can extend to each side of the membrane as illustrated in Figure 8. The grooves 60, 61 are injected with sealant material 62 prior to assembling the fuel cell 10. An appropriate sealant material 62 is a silicon rubber material and a particularly suitable material is known as SILASTIC E RTV (trademark) material.

The membrane electrode assembly 40 is assembled by initially submerging the carbon fiber paper 44, 50 into a mixture of deionized water and TEFLON (trademark) brand polytetrafluoroethylene. The carbon fiber paper 44, 50 is allowed to absorb the TEFLON (trademark) for 10-15 minutes. The carbon fiber paper 50 is then removed from the mixture, air dried for 10-15 minutes, and placed on a hot plate at a temperature of approximately 410 degrees C to soften and bond the TEFLON (trademark) mixture to the carbon fiber paper 44, 50 in a sintering process. When the sintering process is complete, the carbon fiber paper 44, 50 is coated with a mixture of a platinum catalyst and TEFLON (trademark) in the areas earlier described opposite the flow field plate which carry the gases to the electrode area. This mixture is also bonded within the carbon fiber paper 44, 50 in a further sintering process.

Two layers 44, 50 of carbon fiber paper are used with each membrane 43 for each membrane electrode assembly 40. The bonding of the layers 44, 50 with the membrane 43 is done under a combined process of heat, pressure and time until the bonding process is complete and the membrane electrode assembly 40 is consolidated into a single unitary assembly. The consolidation process involves placing the assembly 40 in a press at a temperature of 175 degrees C and increasing the pressure to 6 890 kPa (1000 p.s.i.). A coolant drops the temperature to approximately 80 degrees C over 10 minutes and the bonding process is complete.

The assembly 40 is then milled so as to provide the sealing grooves 60, 61. Subsequently, the coolant, oxidant and fuel inlet and outlet openings, represented by openings 51, 52, 111, 112, 113 and 114 in Figure 5, and the guide pin holes 121, 122 which are used for assembly purposes are punched through the layers 44, 50 and the membrane 43. The sealant material 62 is injected into the sealing grooves 60, 61 on both sides of the electrode assembly 40.

The fuel cell 10 is then assembled by using the guide pin holes 121, 122 as guides for guide pins (not shown). The various components are stacked together and, when assembled, the nuts 120 (see Figure 1) on the ends of the tie rods of fuel cell 10 are torqued to apply suitable compressive force.

In operation, the fuel, preferably in the form of hydrogen, flows from the hydrogen supply and enters the humidification section 30 through the fuel humidification flow field plates 42 (see Figure 1) where the fuel gas is humidified by the water carried by the humidified water jacket plates 39 to a value preferably close to 100% relative humidity. The humidified fuel gas then passes to the active section 24 of the stack assembly 10 where the humidified fuel gas passes through the hydrogen or fuel flow field plates 32 adjacent the anode side of the membrane electrode assemblies 40. The oxidant gas supplied to the second electrode and the fuel are consumed by the electrochemical process and an electrical current is generated which is available to be drawn from the porous electrodes. The unused hydrogen exits the plate 32 in the active section 24 and passes to a tank (not shown) where excess hydrogen may be returned to the inlet line 63 and wherein the above process is repeated.

The oxidant in the form of air or oxygen enters the humidification section 30 of the stack assembly 10 where it is humidified as it passes through the oxidant humidification flow field plates 41 (see Figure 1) adjacent the humidification water jacket plates 39. The humidified oxidant gas then passes to the active section 24 and through the oxidant or fuel flow field plates 33, 34 adjacent the cathode side of the membrane electrode assemblies 40. The air or oxygen then flows out of the active section 24 to a separate tank (not shown) where any pressure exceeding a predetermined value is vented and where any water formed is collected for return to the fuel cell 10 for cooling.

In operation, liquid water is provided to the active section 24 of the fuel cell 10 and circulated therethrough to neutralize the heat generated by the exothermic reaction in the fuel cell. The water travels through the water jacket flow field plates 22, 34 adjacent the hydrogen and oxygen flow field plates 32, 33 (see Figure 1). The water then travels to the humidification section 30 and then to a tank where it can be pumped back to the fuel cell 10.

Many modifications will readily occur to those skilled in the art. For example, rather than a graphite material being used for the electrical conducting plates, other substances could be used including a composite material of KYNAR (trademark) and graphite powder. Likewise, an elastomeric material could be used for the sealant material rather than rubber. It will also be understood that the electrode material may not necessarily be hydrophobic although in the present case, it is so desirable. Although platinum is used as a catalyst in the present instance, it would be possible to use other catalytic substances to promote the reaction. Likewise, while water has been described as being used as coolant, any other suitable coolant, such as ethylene glycol, may be used.

It is further contemplated that rather than machining or milling grooves into the carbon fiber paper which will eventually be used as electrodes and injecting the sealant material into the grooves, grooves need not be formed at all. In this regard, the sealant material could be injected directly into the porous carbon fiber paper to a depth that would contact the membrane without forming grooves and that the quantity of the sealant injected would be such that it would continue to protrude slightly above the surface of the electrode and thereby continue to perform its sealing action in the same manner as set out earlier.

In addition to employing the fully supported membrane electrode and seal assembly in the electrochemically active portion of a fuel cell stack, a fully supported membrane and seal assembly can also be employed in the humidification portion of a fuel cell stack. For ease of manufacture, the membrane assembly in the humidification portion is usually formed of the same membrane and conductive sheet material (preferably carbon fiber paper) as those used in the electrochemically active portion. In the humidification portion, however, the carbon fiber paper is generally not coated with catalyst. As with the membrane assembly used in the electrochemically active portion, it has been found advantageous to employ layers of porous sheet material in the humidification portion which cover and support substantially the entire surface of the membrane. Similarly, the grooving and sealing techniques employed on the porous electrically conductive sheet material in the electrochemically active portion can also be advantageously employed on the porous sheet material in the humidification portion of a fuel cell stack.

Many further modifications will readily occur to those skilled in the art to which the invention relates and the specific embodiments described herein should be taken as illustrative of the invention only and not as limiting its scope in accordance with the accompanying claims.

## Claims

1. A membrane electrode assembly (40) of an electrochemical fuel cell for a stack (10) of several such fuel cells, said assembly (40) comprising first and second layers (44, 50) of porous electrically conductive sheet material and a substantially gas impermeable ion-exchange membrane (43) interposed therebetween, said layers (44, 50) of conductive sheet material covering and supporting substantially the entire surface of said membrane (43) and being fluidly isolated from each other, and each of said layers (44, 50) of conductive sheet material including a catalyst (54) on at least a portion thereof thereby rendering said layers electrochemically active in the areas containing said catalyst, **characterized in** that each of said layers (44, 50) of conductive sheet material has a sealant material (62) protruding above the surface thereof facing away from said membrane (43), said sealant material (62) extending within the pores of said conductive sheet material layers (44, 50).

2. The membrane electrode assembly (40) of claim 1 wherein each of said layers (44, 50) of sheet material has grooves (60, 61) formed in the surface thereof facing away from said membrane (43), said grooves (60, 61) having an extrudable sealant material (62) deposited therein, said grooves (60, 61) generally circumscribing the electrochemically active portion of said assembly.

3. The membrane electrode assembly (40) of claim 2 wherein said grooves (60, 61) extend substantially the entire thickness of each of said layers (44, 50) of sheet material.

4. The membrane electrode assembly (40) of claim 3 wherein said sealant material (62) contacts said membrane (43).

5. The membrane electrode assembly (40) of claim 1 wherein the surfaces of said layers (44, 50) of sheet material facing away from said membrane (43) are impregnated with a sealant material (62), said sealant material (62) generally circumscribing the electrochemically active portion of said assembly.

6. The membrane electrode assembly (40) of claim 5 wherein said sealant material (62) extends substantially the entire thickness of said layers (44, 50) of sheet material.

7. The membrane electrode assembly of claim 1 wherein said layers (44, 50) of sheet material and said mambrane (43) have openings (111, 113) formed therein to accommodate the passage of fluids through said assembly, each of said layers (44, 50) of sheet material having grooves (60, 61) formed in the surface thereof facing away from said membrane (43), said grooves (60, 61) having an extrudable sealant material (62) deposited therein, said grooves (60, 61) generally circumscribing said fluid passage openings (111, 113).

8. The membrane electrode assembly (40) of claim 7 wherein said grooves (60, 61) extend substantially the entire thickness of each of said layers (44, 50) of sheet material.

9. The membrane electrode assembly (40) of claim 8 wherein said sealant material (62) contacts said membrane (43).

10. The membrane electrode assembly (40) of claim 1 wherein said layers (44, 50) of sheet material and said mambrane (43) have openings (111, 113) formed therein to accommodate the passage of fluids through said assembly (40), the surfaces of said layers (44, 50) of sheet material facing away from said membrane (43) impregnated with a sealant material (62), said sealant material (62) generally circumscribing said fluid passage openings (111, 113).

11. The membrane electrode assembly (40) of claim 10 wherein said sealant material (62) contacts said membrane (43).

## Patentansprüche

1. Membran-Elektroden-Anordnung (40) einer elektrochemischen Brennstoffzelle für einen Stapel (10) von mehreren solchen Brennstoffzellen, wobei diese Anordnung (40) eine erste und eine zweite Lage (44, 50) poröses, elektrisch leitendes Blattmaterial und eine dazwischen angeordnete, im wesentlichen gasundurchlässige Ionenaustauschmembran (43) aufweist, wobei diese Lagen (44, 50) aus leitendem Blattmaterial jeweils im wesentlichen die ganze Fläche der Membran (43) bedecken und stützen und voneinander fluiddicht getrennt sind, und wobei jede der Lagen (44, 50) aus leitendem Blattmaterial an mindestens einem Teil davon einen Katalysator (54) aufweist, wodurch die Lagen in den den Katalysator aufweisenden Bereichen elektrochemisch aktiv werden, dadurch gekennzeichnet, daß jede der Lagen (44, 50) aus leitendem Blattmaterial ein Dichtmaterial (62) aufweist, das über die von der Membran (43) wegweisende Fläche vorsteht, wobei sich dieses Dichtmaterial (62) innerhalb der Poren der Lagen (44, 50) aus leitendem Blattmaterial erstreckt.

2. Membran-Elektroden-Anordnung (40) nach Anspruch 1, worin jede der Lagen (44, 50) aus Blattmaterial Rillen (60, 61) besitzt, die in der von der Membran (43) wegweisenden Fläche ausgebildet sind, wobei sich in diesen Rillen (60, 61) ein extrudierbares Dichtmaterial (62) befindet und die Rillen (60, 61) im allgemeinen den elektrochemisch aktiven Bereich der Anordnung umgeben.

3. Membran-Elektroden-Anordnung (40) nach Anspruch 2, worin sich die Rillen (60, 61) im wesentlichen über die gesamte Dicke jeder dieser Lagen (44, 50) aus Blattmaterial erstrecken.

4. Membran-Elektroden-Anordnung (40) nach Anspruch 3, worin das Dichtmaterial (62) mit der Membran (43) in Kontakt ist.

5. Membran-Elektroden-Anordnung (40) nach Anspruch 1, worin die von der Membran (43) wegweisenden Flächen der Lagen (44, 50) aus Blattmaterial mit einem Dichtmaterial (62) imprägniert sind, wobei das Dichtmaterial (62) im allgemeinen den elektrochemisch aktiven Bereich der Anordnung umgibt.

6. Membran-Elektroden-Anordnung (40) nach Anspruch 5, worin sich das Dichtmaterial (62) im wesentlichen über die gesamte Dicke der Lagen (44, 50) aus Blattmaterial erstreckt.

7. Membran-Elektroden-Anordnung nach Anspruch 1, worin die Lagen (44, 50) aus Blattmaterial und die Membran (43) Öffnungen (111, 113) darin ausgebildet haben, um den Durchgang von Fluiden durch die Anordnung zu ermöglichen, wobei jede der Lagen (44, 50) aus Blattmaterial in der von der Membran (43) wegweisenden Fläche Rillen (60, 61) ausgebildet hat, in denen sich ein extrudierbares Dichtmaterial (62) befindet, wobei diese Rillen (60, 61) im allgemeinen die Öffnungen (111, 113) für den Fluiddurchgang umgeben.

8. Membran-Elektroden-Anordnung (40) nach Anspruch 7, worin sich die Rillen (60, 61) im wesentlichen über die gesamte Dicke jeder der Lagen (44, 50) aus Blattmaterial erstrecken.

9. Membran-Elektroden-Anordnung (40) nach Anspruch 8, worin das Dichtmaterial (62) mit der Membran (43) in Kontakt ist.

10. Membran-Elektroden-Anordnung (40) nach Anspruch 1, worin die Lagen (44, 50) aus Blattmaterial und die Membran (43) Öffnungen (111, 113) darin ausgebildet haben, um den Durchgang von Fluiden durch die Anordnung (40) zu ermöglichen, wobei die von der Membran (43) wegweisenden Flächen der Lagen (44, 50) aus Blattmaterial mit einem Dichtmaterial (62) imprägniert sind, wobei das Dichtmaterial (62) im allgemeinen die Öffnungen (111, 113) für den Fluiddurchgang umgibt.

11. Membran-Elektroden-Anordnung (40) nach Anspruch 10, worin das Dichtmaterial (62) mit der Membran (43) in Kontakt ist.

## Revendications

1. Ensemble membrane-électrodes (40) d'une pile électrochimique à combustible pour un empilement (10) de plusieurs telles piles à combustible, ledit ensemble (40) comprenant des première et seconde couches (44, 50) d'un matériau en feuille poreux électriquement conducteur et une membrane pratiquement imperméable au gaz, échangeuse d'ions (43) intercalée entre celles-ci, lesdites couches (44, 50) de matériau en feuille conducteur recouvrant et supportant pratiquement la surface totale de ladite membrane (43) et étant isolées d'un point de vue des fluides l'une de l'autre, et chacune desdites couches (44, 50) de matériau en feuille conducteur comprenant un catalyseur (54) sur au moins une partie de celles-ci, rendant par là lesdites couches électrochimiquement actives dans les zones contenant ledit catalyseur, caractérisé en ce que chacune desdites couches (44, 50) de matériau en feuille conducteur présente un matériau d'étanchéité (62) faisant saillie au-dessus de la surface de celles-ci en partant de ladite membrane (43), ledit matériau d'étanchéité (62) s'étendant à l'intérieur des pores desdites couches de matériau en feuille conducteur (44, 50).

2. Ensemble membrane-électrodes (40) selon la revendication 1, dans lequel chacune desdites couches (44, 50) de matériau en feuille présente des rainures (60, 61) formées dans la surface de celles-ci en partant de ladite membrane (43), lesdites rainures (60, 61) présentant un matériau d'étanchéité extrudable (62) déposé dans celles-ci, lesdites rainures (60, 61) entourant en général la partie électrochimiquement active dudit ensemble.

3. Ensemble membrane-électrodes (40) selon la revendication 2, dans lequel lesdites rainures (60, 61) s'étendent pratiquement sur l'épaisseur totale de chacune desdites couches (44, 50) de matériau en feuille.

4. Ensemble membrane-électrodes (40) selon la revendication 3, dans lequel ledit matériau d'étanchéité (62) touche ladite membrane (43).

5. Ensemble membrane-électrodes (40) selon la revendication 1, dans lequel les surfaces desdites couches (44, 50) du matériau en feuille partant de ladite membrane (43) sont imprégnées avec un matériau d'étanchéité (62), ledit matériau d'étanchéité (62) entourant en général la partie électrochimiquement active dudit ensemble.

6. Ensemble membrane-électrodes (40) selon la revendication 5, dans lequel ledit matériau d'étanchéité (62) s'étend pratiquement sur l'épaisseur totale desdites couches (44, 50) du matériau en feuille.

7. Ensemble membrane-électrodes selon la revendication 1, dans lequel lesdites couches (44, 50) de matériau en feuille et ladite membrane (43) présentent des ouvertures (111, 113) formées dans celles-ci pour loger le passage de fluides à travers ledit ensemble, chacune desdites couches (44, 50) de matériau en feuille présentant des rainures (60, 61) formées dans la surface de celles-ci en partant de ladite membrane (43), lesdites rainures (60, 61) présentant un matériau d'étanchéité extrudable (62) déposé dans celles-ci, lesdites rainures (60, 61) entourant en général lesdites ouvertures de passage de fluides (111, 113).

8. Ensemble membrane-électrodes (40) selon la revendication 7, dans lequel lesdites rainures (60, 61) s'étendent pratiquement sur l'épaisseur totale de chacune desdites couches (44, 50) de matériau en feuille.

9. Ensemble membrane-électrodes (40) selon la revendication 8, dans lequel ledit matériau d'étanchéité (62) touche ladite membrane (43).

10. Ensemble membrane-électrodes (40) selon la revendication 1, dans lequel lesdites couches (44, 50) de matériau en feuille et ladite membrane (43) présentent des ouvertures (111, 113) formées dans celles-ci pour loger le passage de fluides à travers ledit ensemble (40), les surfaces desdites couches (44, 50) de matériau en feuille en partant de ladite membrane (43) étant imprégnées avec un matériau d'étanchéité (62), ledit matériau d'étanchéité (62) entourant en général lesdites ouvertures de passage de fluides (111, 113).

11. Ensemble membrane-électrodes (40) selon la revendication 10, dans lequel ledit matériau d'étanchéité (62) touche ladite membrane (43).
